# EUROPEAN PATENT SPECIFICATION

(11) **EP 3 205 056 B1**
(45) Date of publication and mention of the grant of the patent: **23.02.2022**
(21) Application number: 15794283.0
(22) Date of filing: 02.10.2015
(51) Int. Cl.: G06F 9/455, G06F 21/53

(54) **METHOD AND APPARATUS FOR CONTROLLING DEVICES IN A PERSONAL ENVIRONMENT USING A PORTABLE COMPUTING DEVICE**
VERFAHREN UND GERÄT ZUM KONTROLLIEREN ANDERER GERÄTE EINER PERSÖNLICHEN UMGEBUNG MIT HILFE EINES TRAGBAREN RECHNERSYSTEMS
PROCEDE ET APPAREIL POUR CONTROLLER DES APPAREILS DANS UN ENVIRONNEMENT UTILISANT UN PDA

(30) Priority: 06.10.2014 DE 102014114481
(43) Date of publication of application: 16.08.2017
(73) Proprietor: Red Bend Ltd., 4501307 Hod Ha'Sharon (IL)
(72) Inventor: MELER, Evyatar, 76812 Yad Binyamin (IL); NOAM, Yair, 52395 Ramat Gan (IL); RAVE, Micha, 46305 Herzliya (IL); EILAM, Tali, 46423 Herzliya (IL)
(74) Representative: Rummler, Felix
(86) International application number: PCT/IB2015/001747
(87) International publication number: WO 2016/055844

(56) References cited:
- JP-A- 2008 225 823
- JP-A- 2008 225 823
- US-A1- 2005 097 478
- US-A1- 2005 097 478
- Doug Hyde: "A Survey on the Security of Virtual Machines", , 21 April 2009 (2009-04-21), pages 1-11, XP055498530, Retrieved from the Internet: URL:https://www.cse.wustl.edu/~jain/cse571 -09/ftp/vmsec.pdf [retrieved on 2018-08-08]

## Description

### TECHNICAL FIELD

The present invention relates to using software installed on a portable computing device and executed using a virtual machine to control devices associated with a personal environment of a user of the portable computing device.

### BACKGROUND OF INVENTION

Personal environments include any ambient environment in close proximity of a person and where they spend time. Examples of this are a motor vehicle, a home and/or an office. A personal environment may also consist of the person's immediate vicinity or body. Such personal environments include an ever-increasing amount of electronics for controlling devices associated with the given environment which present a number of challenging issues that the present application addresses.

For instance, modern vehicles i.e. motor vehicles contain an ever-increasing amount of electronics for controlling all of the vehicles functions. In-vehicle systems such as IVI systems, sometimes referred to as in-car-entertainment (ICE) systems, have become ubiquitous and are now effectively considered an essential part of the vehicle. Furthermore, with the advent of computing devices such as portable smart devices e.g. mobile phones and tablets, modern vehicles also include the capability of being able to connect with such portable computing devices by means of either a physical or wireless connection.

Automotive original equipment manufacturers (OEMs) generally implement IVI systems using advanced multimedia technologies. However, a vehicle's lifespan may be between 15 to 20 years whereas such software and hardware consumer electronics multimedia technologies change every 2 to 3 years. This leads to the problem of needing to update the IVI's software and replacing IVI's hardware in older vehicles.

As the vehicle IVI is currently integrated in the vehicle, it is becoming increasingly difficult and costly in view of the level of integrated electronics and peripherals involved i.e. it is no longer simply a question of swapping a legacy car stereo unit including a tape or CD player.

Some OEMs address this lifecycle gap problem by designing specific solutions/devices which interact only with the same brand's IVI, where the IVI remains in the vehicle while the solution/device adding to it extra functionality and connectivity. For example, the Volvo Sensus Connected Touch, which is available as an after-market accessory and effectively converts the vehicle's screen into a connected media centre with touch function. The system enables a driver to surf the net, listen to radio stations, or play music from popular services like Spotify and Deezer through connection of a 3/4G dongle or sharing of the Internet connection (WiFi) from a mobile phone. The Sensus Connected Touch is installed in the glove compartment and offers several inputs where external storage and sound and image sources may be connected.

Further, Audi has launched a tablet called Audi Smart Display, wherein, through a secure WLAN interface, and via the Android operating system, the Smart Display can connect seamlessly with the car and enrich it with the state-of-the-art computing and graphics power of its Nvidia Tegra 40 processor. Audi Smart Display integrates with the car's systems via Wi-Fi, letting passengers control the car's infotainment system and radio and access the internet via the car's built-in LTE connection. However, such a solution generally requires a high development cost, which also leads to higher vehicle prices.

Currently, in order to tackle the problem of keeping the increasingly sophisticated IVI of the head unit of the vehicle up to date, some manufacturers now make use of the capabilities of smart devices, thereby adding extra functionality to the IVI such as media, navigation or weather info from the smart device with its richness of applications and capability to store a large amount of media content which may be streamed wirelessly. This solution is based on a simple IVI system that provides two-way access between the vehicle's IVI system and the device's additional functionality and control, thereby enabling the projection of the device display for sharing its content with the IVI system integrated in the vehicle and accessing the device using the vehicle's IVI.

An example of this is MirrorLink^{™} (previously known as Terminal Mode) which offers connectivity between a smartphone and the vehicle's IVI system. Drivers may connect their phone to the vehicle's IVI system with a cable and use their phone applications via the head unit of the vehicle i.e. the navigation screen and dashboard/steering-wheel buttons. In other words, MirrorLink enables a driver to use their smartphone in the same way they use their vehicle radio and other controls, wherein the car head unit hosts the IVI system. Standard Internet technologies (such as Internet Protocol) are used for compatibility with a wide range of devices and other standard technologies which have recently been introduced into vehicles, such as Bluetooth^{™} and USB, and Wi-Fi. Universal Plug and Play (UPnP^{™}) facilitates quick connection of a smartphone. Virtual Network Computing (VNC^{™}) replicates the phone's display on the navigation screen and communicates user prompts back to the phone. In addition to Bluetooth^{™}, MirrorLink^{™} streams audio with Real-Time Protocol (RTP). However, a clear disadvantage of simple IVI system such as MirrorLink^{™} is that it requires standards and backward compatibility with the smart device and may give rise to security issues as an Android application running on the phone may enable malware to take over the IVI and/or other vehicle systems such as the temperature control system, locking system or even the engine control unit (ECU). There is also no possibility to guarantee the resources allocated to applications that connect/use/control the IVI since the Android OS on the device may allocate resources to other applications on the same portable smart device. If an IVI system does not have the corrected resources allocated, there is a high likelihood that the IVI system will malfunction.

Another newer example of integrating mobile technology into the car is Apple's CarPlay system. Depending on a car-maker's preference and hardware configuration, CarPlay will work differently in each vehicle. Hyundai and Volvo have both opted for touchscreen interfaces to control CarPlay, while Mercedes-Benz relies on a hardware knob and a handful of buttons to control the system. Similarly, each car maker integrates CarPlay into its existing systems differently. Mercedes and Hyundai essentially implement CarPlay like a software application, completely separating it from the native navigation, Bluetooth, and climatecontrol systems. In contrast, Volvo takes a different route by building an interface that integrates CarPlay in with the native systems, providing quick access to things like climate control without requiring the driver to exit CarPlay.

Moreover, apart from controlling IVI by the smart device many OEM's now offer control of additional car systems such as lock/unlock using mobile applications. For example. My BMW Remote App, Tesla model S and Nissan CARWINGS (iPhone application). However, controlling more important car systems using smart devices clearly requires higher security standards than the ones provided by a conventional smart phone. For instance, conventional smartphones are subject to a number of different security risks which could have a knock on detrimental effect on car systems. For example, conventional smartphones are vulnerable to malware which could cause both the smartphone and the car systems to malfunction, thereby even putting lives at risk.

Similar issues arise with other personal environments. A home personal environment may comprise a set of different control systems including, for example, a home infotainment system, a cooling/heating system, a system for controlling domestic appliances etc. Further, an office personal environment may consist of a lighting control system, a personal workstation i.e. desktop computer. Moreover, the personal environment of an individual may comprise a number of devices carried with the person such as wearable technology or devices collecting physiological data and controlling physiological activities for example, a pulse meter, pacemaker and insulin pump. In a similar manner to the example of a motor vehicle, home, office and human body personal environments also present similar security risks.

In general, visualization may be used, for example, to use a single data processing system, such as a computer, to run multiple operating systems. The operating systems may be different, or may include multiple instances of a single operating system. One reason for using virtualization is to provide security in an environment wherein different operating systems and/or applications are executed using a single data processing system. Such an approach Increases efficiency as fewer data processing systems may be required, and/or may increase the utilisation of the components of the data processing system.

Operating systems and/or applications such as smartphone applications that execute In the operating systems may execute normally under virtualization with little or no modification to the operating systems or applications. Virtualization software is provided that provides a virtual platform that is a simulation of some or all of the components of the data processing system to the operating systems. Therefore, the operating systems and applications use the "virtual" components of the virtual platform. The virtualization software (often called a virtual machine monitor, VMM) monitors use of the virtual components of the various virtual platforms and allocates use of the "real" components of the data processing system to the operating systems based on use of the corresponding virtual components. An operating system and the applications executing in it are called a virtual machine.

US 2005/097478 A1 describes a control server to manage the distribution of data (including audio and video), voice, and control signals among a plurality of system components connected via a wired and/or wireless communications network. The system components include audio/visual components (such as, televisions, monitors, PDAs, notepads, notebooks, MP3, portable stereo, etc.) as well as household appliances (such as, lighting, ovens, alarm clocks, etc.). A portable controller allows a user to access and control the system components from any location within a controlled residential and/or non-residential environment, including its surrounding areas. The portable controller includes a user and management interface that contains customized control screens for the system components. The control screens are stored In a hierarchical architecture that is searchable by region or component type.

Doug Hyde: "A Survey on the Security of Virtual Machines", 21 April 2009, pages 1-11, XP055498530, describes how Virtual machines (VM) can be used to provide a better security model than traditional machines by providing an additional layer of hardware abstraction and isolation, effective external monitoring and recording, and on-demand access.

### SUMMARY OF INVENTION

The present invention Is defined in the independent claims. Preferred features are recited in the dependent claims. In the following description, any embodiment referred to and not falling within the scope of the claims is merely an example useful to the understanding of the invention.

The present invention solves the aforementioned lifecycle and security problems by decoupling and physically detaching the systems for controlling the devices associated with the personal environment of a user from the personal environment while preserving the same level of security of current device control systems.

In a first aspect, the present invention provides an apparatus comprising a portable computing device comprising a first Virtual Machine (VM) operable to communicate with and control at least one device in a personal environment associated with a user of the portable computing device.

The first VM provides an interface to enable the portable computing device to communicate with the at least one device and the portable computing device may be connected thereto via physical means such as a cable e.g. HDMI cable or docking station or wireless means.

In a preferred embodiment, the portable computing device is operable to execute a second VM which is operable to execute an operating system, for example Android or iOS. The operating system is capable of running software applications, preferably ad-hoc preintegrated applications.

In a preferred embodiment, the portable computing device is a "connected" device i.e. the device is connected to a network. This means that the device is generally connected to devices or networks other than the in-vehicle devices of the motor vehicle via various wireless means and protocols such as Bluetooth, NFC, WiFi, 3G, 4G etc.

By providing a "connected" device, the present invention also enables on-line software updates of device control system for example, via the Internet. Thus, the device control system may conveniently receive updates Over the Air.

In a preferred embodiment, the software of the portable computing device is further operable to execute at least one further (second) VM wherein the second VM is operable to control the network connectivity. In one implementation, the first VM executes the device control system and the second VM which controls the network connectivity is also operable to execute the OS of the portable computing device which controls its own hardware and may be open OS or not. In other words, the device control software executes independently of and securely separated from the operating system of the portable computing device and network connectivity, thereby providing improved security by separating the network connectivity from the device control system.

In a further preferred embodiment the portable computing device is operable to execute a further (third) VM alongside the first and second VMs previously mentioned. The second VM is operable to execute an 'open' operating system i.e. an operating system such as Android which is capable of running ad-hoc downloadable applications. In a preferred implementation thereof, one of the VMs i.e. the first executes the software to control the devices associated with the personal environment of the user, the second VM executes the portable computing device's own open operating system, and the third VM controls the hardware of the device including network connectivity and provides peripheral access to the other virtual machines i.e. acts as a means known in the art as an I/O engine.

The VMs are isolated from one another such as according to the design of known classic VM architectures. For instance, the present invention may be implemented using a Type 1 (known as native or bare metal) hypervisor which runs directly on the hardware of the portable computing device (i.e. as a host) to control the hardware and to manage the (guest) OSs. An OS thus runs on another level above the hypervisor. Ideally, the hypervisor is a socalled "thin" hypervisor which is a hypervisor with a simplified set of functions and that, for example, deals with a single OS at a time, and does not monitor any devices. A thin hypervisor may be much smaller than the OS and is not an OS itself. This provides security by ensuring malware is prevented from entering the VMs dedicated to the control system of specific devices and physical hardware access.

In a preferred embodiment, the personal environment includes at least one of a motor vehicle, a house, an office, the body of the user.

In a further preferred embodiment, the first VM is further operable to control the at least one device by executing at least one control system including at least one of an in-vehicle-infotainment system, vehicle locking system, temperature control system, engine control system, heating, ventilation and air conditioning system, lighting control system, audio-visual system, appliances control system, watering system, security system, wearable technological device, pulse meter, blood pressure meter, glucose level detector. It will be understood by the skilled person in the art that the aforementioned control systems and devices are merely examples and may also include any device collecting physiological data and controlling physiological activities in addition to any devices implanted in the body of a user, for example, a pacemaker or insulin pump.

In an exemplary implementation, the VM may control provision of media content to at least one in-vehicle device. The in-vehicle devices may be operable to reproduce audio and/or audio/visual entertainment and information such as in the case of automotive navigation systems (SatNav). This includes playing media such as mp3 or video files. In general, such vehicle media reproduction devices include at least an electronic video display, preferably with a touchscreen, and loudspeakers. A group of such devices may also be known collectively as the peripheral devices of an IVI system. However, the in-vehicle devices may also include devices not capable of media reproduction such as devices comprising the vehicle locking system, temperature control system and engine control system (ECU). The first VM may comprise operating systems such as GENIVI, QNX, Tizen or Android.

The present invention and aforementioned preferred embodiments thereby uses the portable computing device to execute the IVI system, vehicle locking system, temperature control system and/or engine control system (ECU) which would normally be installed in the vehicle e.g. as part of head unit in the case of the IVI system. In contrast to the prior art, the present invention obviates the need for such sophisticated integrated control devices such as the head unit in the vehicle and reduces the complexity of the manufacturing process and reduces cost since less in-vehicle hardware and software is required. Furthermore, by virtue of the virtualization, security issues that may arise otherwise i.e. when external hardware is connected with in-vehicle devices are also prevented.

In a simple embodiment the portable computing device is not a "connected" device and runs the IVI car system and/or in-vehicle device control system on the VM of the device. Using a VM for running an IVI car system facilitates the deployment of an IVI car system to a device given a plurality of IVI car systems comprising different car OSs on one hand and plurality of portable devices comprising various operating systems and various underlying hardware on the other. In the absence of virtualization, running the IVI car system on a specific device with a given OS and hardware would require a custom adaptation of the IVI car system OS (Genivi, QNX, etc) for each such given device with its different hardware. This imposes a considerable burden on everyone involved - the car system manufacturers, the portable devices' manufacturers and those that integrate the two (integrators, car OEMs). Of course that whenever a new device with new hardware and/or new OS is introduced the effort has to be repeated for each IVI car system. Instead of numerous different adaptations of the IVI car system OS for interacting with various different portable devices, the present invention suggests a universal approach which is less hardware dependant that would allow car system manufacturers to easily plug the car system to any virtualized device. The car system manufacturers would replace its OS physical drivers with virtual (front-end) drivers so it can run on a VM instead of running directly on the device hardware. A virtualization provider would provide virtualization layer (hypervisor) through which the virtual drivers may interact with compatible back-end drivers created for interacting with the physical drivers running in the portable device OS.The portable device is introduced with the hypervisor. The device OS is adopted to run on top of the hypervisor and is further introduced with the appropriate back-end drivers. Eventually, the IVI car system gets peripherals device access through the back-end/front-end architecture. Thus, by a onetime change to a given IVI car system, the modified IVI car system can be plugged into any virtualized device.

The invention further provides facilitated update of the control systems such as the IVI system since the portable computing device may be removed from the vehicle and connected to, for example, a PC in order to download an update even when the device is not connected to a network. Thus, the control systems may advantageously be updated without the need to transport the vehicle to a centre for servicing.

In a further preferred embodiment, the portable computing device is a mobile phone, preferably a smart phone. However, it will be understood by the skilled person that the portable computing device may comprise any smart electronic device with sufficient resources to implement the present invention. In this context, a smart device is considered to be a device that can operate to some extent interactively and autonomously. Apart from this enabling the relevant control system(s) to be physically detached from the personal environment, this also conveniently makes use of the processing resources already provided by a device owned by the vehicle operator.

In a preferred embodiment of the invention the at least one in-vehicle device forms part of the personal environment. For example, in a motor vehicle this enables the portable device to provide the IVI system for an IVI-less vehicle including only a skeleton of peripheral hardware or media reproduction devices i.e. without a central host computer control system. The IVI system in the device can thereby easily be coupled with a vehicle with very basic hardware available and/or is easily retrofittable in an older vehicle.

In a second aspect, the present invention provides a system including a personal environment having at least one device in the personal environment, and a portable computing device according to the aforementioned apparatus and preferred embodiments thereof.

In a preferred implementation of the second aspect, the VM running on the portable device comprises a control system to control the at least one device associated with the user, as described in the preferred embodiments above.

In a further preferred embodiment of the second aspect, the at least one device comprise at least one of an electronic visual display, loudspeakers, a touchscreen, a heater, an air conditioner and an electronic appliance. The display and loudspeakers enable reproduction of audio/video media content from portable computing device and the touchscreen enables facilitated selection of functions projected from portable computing device.

In a third aspect, the present invention provides a method comprising establishing communication between a portable computing device and at least one device associated with at least one personal environment of a user of the portable computing device; and controlling the at least one device using a first virtual machine running on the portable computing device.

In a preferred implementation of the third aspect, the method further comprises controlling provision of media content to the at least one device by executing a control system on the portable computing device.

In another preferred embodiment, the method further comprises executing a second virtual machine on the portable computing device, wherein the second virtual machine executes an operating system controlling the portable computing device, wherein the operating system may be an open operating system or not.

In other preferred embodiments, the method further comprises, by the portable computing device, executing a plurality of virtual machines and executing an in-vehicle device control system e.g. the IVI system on the first VM and executing an operating system of the portable computing device on a second virtual machine.

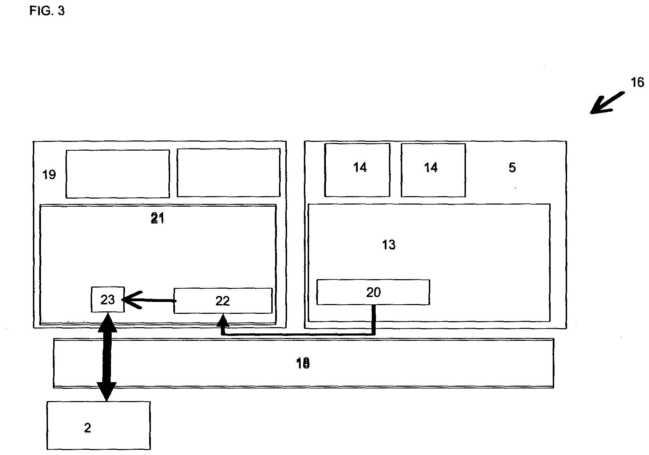

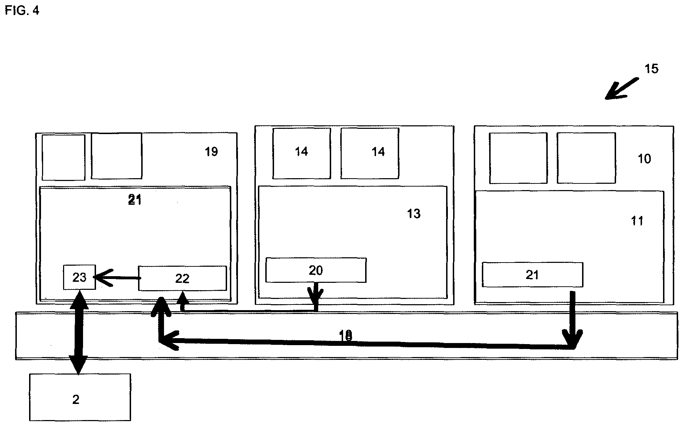

In a further preferred embodiment the method includes executing a VM which executes an 'open' operating system i.e. an operating system capable of running ad-hoc downloadable applications. In a preferred implementation thereof, one of the VMs executes the software to control in-vehicle devices i.e. the VM executes the IVI system, a second VM executes the portable computing device's own open operating system, and the third VM controls network connectivity and is responsible for the hardware and provides peripheral access to the other virtual machines through a back-end and front-end architecture as illustrated in Figures 3 and 4 i.e. acts as an I/O engine as defined above.

In further preferred embodiments the personal environment includes at least one of a motor vehicle, a house, an office and the body of the user, and the step of controlling preferably includes executing at least one control system including at least one of an in-vehicle-infotainment system, vehicle locking system, temperature control system, engine control system, heating, ventilation and air conditioning system, lighting control system, audio-visual system, appliances control system, watering system, security system, a system for collecting physiological data and/or controlling physiological activities of the user.

In a preferred implementation of the third aspect, the portable computing device is a portable mobile phone, preferably a smart phone.

### BRIEF DESCRIPTION OF THE DRAWINGS

FIG. 1 illustrates an example of a preferred implementation of the present invention.
FIG. 2 illustrates a preferred implementation of the present invention.
FIG. 3 illustrates a full virtual IVI according to an embodiment of the present invention.
FIG. 4 illustrates a virtualized mobile device with embedded IVI according to an embodiment of the present invention.

### DETAILED DESCRIPTION

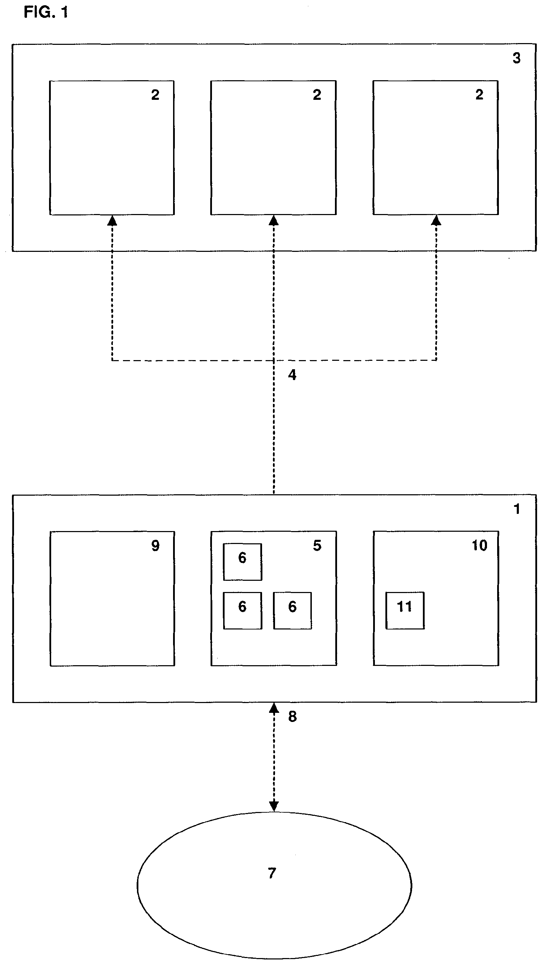

FIG. 1 shows an example of a preferred implementation of the present invention and illustrates a portable computing device 1 in the form of a smartphone. The smartphone 1 is operable to communicate with a plurality of devices 2 integrated in a car 3 and is connected via a cable or docking station or a wireless communication link 4 such as Bluetooth to an input in the car 3. The set of devices 2 include an LCD screen including a touchscreen capability and loudspeakers either connected to the input. Devices 2 are peripheral devices in relation to the smartphone 1 which executes a first VM 5 to control the devices. In a preferred implementation, the smartphone forms a communication link by being connected via an HDMI cable interface between the phone 1 and the screen 2. The HDMI cable enables output to be transmitted by the phone i.e. video and audio to the screen. According to this implementation, the smartphone 1 is further connected to the screen 2 via a wireless Bluetooth communication link in order to enable input from the touch screen to be transmitted to and implemented by the phone. In an alternative preferred implementation, the smartphone 1 is connected to the devices using a wireless link such as WiFi using, for example, Miracast or Mirrorlink. The first virtual machine 5 includes a number of software applications (apps) 6 running thereon which together provide the functionality of an IVI system. For example, one of the apps 6 is an audio and/or video media player. A further app 6 may includes the personalised settings of the driver. The personalised settings may include such programmable criteria such as the style of the Graphic User Interface (GUI), the specific volume, bass and treble settings preferred normally by the driver during media playback and/or security settings e.g. determining whether a further password or PIN is required before the IVI software may be accessed. A further application 6 may be included to receive and manage software updates from a network 7 such as a Mobile Operator network when the smartphone 1 is connected to one via a further communication link 8. The smartphone 1 comprises up-to-date hardware 9 including, for example, a symmetric multiprocessing central processing unit (CPU), a graphics processing unit (GPU), GPS and means to play high definition (HD) multimedia such as a multi-core processor with dual or quad cores. Furthermore, the smartphone 1 comprises storage means for storing large amounts of media content and infotainment. The IVI system is used to control provision of the stored media content to the in-vehicle devices, preferably via an API installed on the phone. The smartphone preferably executes at least one further VM 10 which executes the operating system 11 of the smartphone 1. The smartphone 1 may also execute further VMs (as shown in Fig. 4) which execute additional in-vehicle device control systems to control in-vehicle devices such as the vehicle locking system or temperature control system.

The skilled person will understand that there are a number of different ways to implement the invention. For example, the smartphone 1 may be coupled with a plurality of in-vehicle devices 2, wherein the vehicle does not have any integrated API. The IVI may either be installed on and run directly from a VM running on the smartphone 1 or via a VM running on a portable device such as a smart key. Such a smart key preferably comprises a system-ona-chip (SoC). The smart key may also comprise means for interfacing with the main vehicle management system i.e. ignition in order to start the engine.

It will also be understood by the skilled person that the entire IVI system may also be stored on such a smart key or any other portable device other than a smartphone 1, but comprising the necessary hardware and software elements as described above in order to control the in-vehicle devices 2.

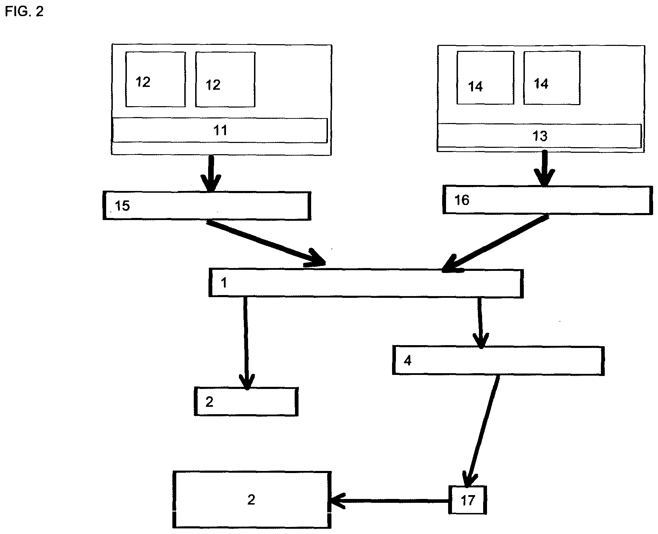

FIG. 2 illustrates the architecture of a system according to a preferred implementation of the present invention. Specifically FIG. 2 shows a portable mobile computing device 1 such as a smartphone which includes a native OS 11 such as Android and a plurality of apps 12. Further, a vehicle OS 13 i.e. car operating system is also shown also including a plurality of its own apps 14. The car OS 13 includes an IVI system and/or the Engine Control Unit. According to this implementation, both the phone 15 and car systems 16 are virtualized and embedded on a mobile device 1 such as the smartphone as independent and distinct VMs. This is outlined in more detail in FIGS. 3 and 4 as described below. The mobile device 1 may then communicate via these VMs with the car electronic visual display 2 in addition to a hardware component embedded in the car head unit 4. The IVI VM can then, via a CAN bus 17 be connected to the embedded hardware component 2, control the car head unit peripheral devices 2 such as loudspeakers. As described with respect to FIG. 1, the mobile device 1 forms a communication link to the in-vehicle electronic visual display 2 via an HDMI cable interface whilst the a wireless Bluetooth communication link enables input from the touch screen to be transmitted to and implemented by the mobile device. In an alternative preferred implementation, the mobile device 1 is connected to the embedded hardware component 2 using a wireless link such as WiFi using, for example, Miracast or Mirrorlink.

FIG. 3 shows the software architecture of a full virtual IVI 16 of the car OS 13. A hypervisor 18 may host multiple VMs 5, 10 including dedicated VMs for a virtual IVI and an I/O Engine 19. The virtual IVI VM 5 includes the car OS 13 i.e. the operating system native to the vehicle in which the IVI is to be implemented. The virtual IVI VM 5 also includes a virtual driver 20. The I/O Engine 19 includes a platform management OS 21 which, in turn, includes a back end driver 22 and native driver 23, wherein the native driver 23 communicates with the hardware resources 2 i.e. ultimately the car head unit peripherals or in-vehicle devices to be controlled by the IVI. The virtual IVI VM communicates with the back end driver 22 using its respective virtual driver 20 via the hypervisor 18.

FIG. 4 illustrates a preferred implementation of the present invention. Specifically FIG. 3 shows the software architecture of a virtualized mobile device 15 such as a smartphone including an embedded IVI system. A hypervisor 18 hosts multiple VMs 5, 10 including dedicated VMs for a virtual mobile device 10, a virtual IVI 5 and an I/O Engine 19. The virtual mobile device VM 10 includes the phone OS 11 i.e. the operating system native to the smartphone and a plurality of applications 12. The phone OS 11 further includes a virtual driver 24. The virtual IVI VM 5 includes the car OS 13 i.e. the operating system native to the vehicle in which the IVI is to be implemented. The virtual IVI VM 5 also includes a virtual driver 20. The I/O Engine 19 includes a platform management OS 21 which, in turn includes a back end driver 22 and native driver 23, wherein the native driver 23 communicates with the hardware resources 2 i.e. ultimately the in-vehicle devices to be controlled by the IVI. The virtual mobile device VM 10 and virtual IVI VM 5 communicate with the back end driver 22 using their respective virtual drivers 20, 24 via the hypervisor 18.

By running the IVI system and/or in-vehicle device control system(s) from a portable device such as a smartphone and/or smart key, the present invention further improves security in the case of a theft or loss of the vehicle and/or the portable device(s) by providing lock and wipe option for the entire IVI. The IVI system may be deleted by means of sending an instruction from the OEM over a mobile network. When received, this instruction would then render the IVI system of the portable device no longer functional. In the same manner, such a system would also enable the facilitated restoration of the IVI system and, for example, driver personalisation specific to the car which formed part of the IVI system.

In summary, the present invention provides a more flexible and less complex apparatus, system and method for implementing an IVI system by eliminating its dependence on the life cycle of a car in contrast from known integrated IVI systems which become dated within a relatively short timescale. Furthermore, the present invention facilitates maintenance of an up-to-date IVI system in terms of hardware and software since this is performed on or via the portable device rather than on the vehicle as a whole. In other words, the invention eliminates the need for servicing the entire vehicle due to a fault in the IVI system. The invention also saves development costs for OEMs and obviates the need for a car key as all such functions can be installed on the portable device. The invention can also improve the all-round user experience provided by an OEM as it enables the OEM to easily customise and personalise the IVI system. An additional advantage is that car share programs such as DriveNow may be simplified since the driver personalisation is fully contained within a portable device according to the present invention.

The skilled person will also appreciate that the aforementioned example may also be applied to a different personal environment such as a house achieving similar advantages. According to a further example of the present invention (not shown), a portable computing device such as a smartphone or tablet is operable to communicate with a plurality of devices that form part of the house via a docking station, for example, or a wireless connection. The set of devices may include for example a boiler, an air-conditioner, domestic appliances, lighting, home entertainment devices. The portable computing device executes a first VM to control the devices. The first VM may, in one embodiment, include different apps in order to provide control systems for different devices or sets of devices. Examples of the control systems the portable computing device could execute on the VM are as follows: illumination (lighting) control, electric power control, Heating, Ventilation and Air-conditioning (HVAC), access control, fire alarm system, plumbing, security system including alarm and/or closed-circuit television (CCTV). In a further example, a second VM may be executed on the portable computing device, wherein the second VM controls the hardware of the portable computing device including the network connectivity. By implementing the house management and control systems on a separate and distinct VM from the portable computing device's own hardware and network connectivity, a secure method for implementing household device control systems is provided which offers a central means by which updates may be received. As in the case of a vehicle personal environment, in the case of a house personal environment house key/access control, power control and the like require a high level of security and, when executing them on a portable computing device, the present invention addresses the need to maintain security i.e. prevent hacking. Furthermore, this example of the present invention enables easy customisation and personalisation, for example, desired heating and illumination levels in addition to personalised volume levels of the devices forming the home entertainment systems.

A further example of another implementation of the present invention similar to the above is wherein the personal environment of the user of a portable computing device is an office space. The implementation as described with respect to the house example may also be applied to an office where many of the same devices would exist i.e. illumination (lighting) control, electric power control, Heating, Ventilation and Air-conditioning (HVAC), access control, fire alarm system, plumbing, security system including alarm and/or closed-circuit television (CCTV). Rather than a home entertainment system, the first VM executed by the portable electronic device may be operable to wirelessly communicate with the office workstation of the user. Apart from controlling the workstation devices to apply personalised settings such as volume of loudspeakers and screen brightness of the display, the first VM may also include a security and/or access control system to enable the user to log into the office network. Furthermore, the first VM may also control other office devices such as servers and printers. In one implementation, an office may consist of a number of different workspaces, each including a plurality of different devices forming a workstation. A user of the portable computing device according to the present invention may simply use a docking station to enable the portable computing device to control the set of workstation devices in terms of security access i.e. logging in, and personal settings. Such an implementation advantageously enables a given user to simply and securely utilise any free workspace and automatically, via the portable computing device, apply their own personalisation thereto i.e. making the workspace their own personal environment.

In another example of an implementation of the present invention, the personal environment of the user may be their body. In this case the set of devices being controlled by the first VM could be wearable or implanted technology. In particular, such devices could comprise any device collecting physiological data such as a pulse meter, accelerometer, blood pressure meter, glucose level detector and/or any medical device controlling physiological activities, for example, a pacemaker or insulin pump. Similar to the aforementioned examples of house and office personal environments, a second VM may be executed on the portable computing device, wherein the second VM controls the hardware of the portable computing device including the network connectivity. By implementing the control systems on a separate and distinct VM from the portable computing device's own hardware and network connectivity, a flexible method for implementing personal environment device control systems is provided which offers a central means by which updates may be received e.g. for the firmware of the monitoring devices.

It will be further understood by the skilled person that a single portable computing device including a number of different VMs being executed thereon may be implemented to provide device control systems for a plurality of different personal environments i.e. the same portable computing device includes VMs for operating car, house, office and/or wearable and/or implanted devices. In a preferred implementation, each personal environment has a dedicated VM on the same portable device wherein a single VM is provided in order to control devices associated with a car, whilst a further VM is provided for controlling devices associated with the physical body of the user of the computing device. Furthermore, in a further implementation, a further dedicated VM is provided for an I/O engine in accordance with the implementations of the vehicle personal environment illustrated in FIGS. 3 and 4.

## Claims

1. An apparatus comprising:
a portable computing device (1) comprising:
at least one first virtual machine (5), wherein the first virtual machine is operable to communicate with and control at least one device (2) associated with at least one personal environment of a user of the portable computing device; and
at least one second virtual machine (10) operable to execute an operating system of the portable computing device and control network connectivity of the portable computing device,
wherein said at least one device is in-vehicle-infotainment system, IVI, and
wherein the first virtual machine comprises an operating system native to the vehicle in which the IVI system is to be implemented.

2. The apparatus of claim 1 wherein the second virtual machine is operable to execute an open operating system of the portable computing device and the portable computing device is further operable to execute a third virtual machine operable to control the portable computing device's own hardware including the network connectivity.

3. The apparatus of any of the preceding claims wherein the personal environment includes a motor vehicle.

4. The apparatus of any of the preceding claims wherein the portable computing device is a mobile phone.

5. The apparatus of any of the preceding claims wherein the at least one device forms part of the personal environment.

6. A method comprising the steps of:
establishing communication between a portable computing device and at least one device associated with at least one personal environment of a user of the portable computing device;
controlling the at least one device using a first virtual machine running on the portable computing device;
executing a second virtual machine (10) on the portable computing device, wherein the second virtual machine (10) executes an operating system of the portable computing device; and
controlling network connectivity of the portable computing device with the second virtual machine,
wherein said at least one device is in-vehicle-infotalnment system, IVI, and
wherein the first virtual machine comprises an operating system native to the vehicle in which the IVI system is to be implemented.

7. The method of claim 6 further comprising executing an open operating system on the second virtual machine, and executing a third virtual machine and controlling the hardware of the portable computing device including the network connectivity with the third virtual machine.

8. The method of claim 6 or 7, wherein the personal environment includes a motor vehicle.

## Patentansprüche

1. Einrichtung, die Folgendes umfasst:
eine tragbare Computervorrichtung (1), die Folgendes umfasst:
mindestens eine erste virtuelle Maschine (5), wobei die erste virtuelle Maschine betreibbar ist, um mit mindestens einer Vorrichtung (2), die mindestens einer persönlichen Umgebung eines Benutzers der tragbaren Computervorrichtung zugeordnet ist, zu kommunizieren und diese zu steuern; und
mindestens eine zweite virtuelle Maschine (10), die betreibbar ist, um ein Betriebssystem der tragbaren Computervorrichtung auszuführen und die Netzwerkkonnektivität der tragbaren Computervorrichtung zu steuern,
wobei die mindestens eine Vorrichtung ein fahrzeuginternes Infotainmentsystem (IVI) ist und
wobei die erste virtuelle Maschine ein Betriebssystem umfasst, das zu dem Fahrzeug gehört, in dem das IVI-System implementiert werden soll.

2. Einrichtung nach Anspruch 1, wobei die zweite virtuelle Maschine betreibbar ist, um ein offenes Betriebssystem der tragbaren Computervorrichtung auszuführen, und die tragbare Computervorrichtung ferner betreibbar ist, um eine dritte virtuelle Maschine auszuführen, die betreibbar ist, um die eigene Hardware der tragbaren Computervorrichtung einschließlich der Netzwerkkonnektivität zu steuern.

3. Einrichtung nach einem der vorstehenden Ansprüche, wobei die persönliche Umgebung ein Kraftfahrzeug beinhaltet.

4. Einrichtung nach einem der vorstehenden Ansprüche, wobei die tragbare Computervorrichtung ein Mobiltelefon ist.

5. Einrichtung nach einem der vorstehenden Ansprüche, wobei die mindestens eine Vorrichtung einen Teil der persönlichen Umgebung bildet.

6. Verfahren, das die folgenden Schritte umfasst:
Einrichten einer Kommunikation zwischen einer tragbaren Computervorrichtung und mindestens einer Vorrichtung, die mindestens einer persönlichen Umgebung eines Benutzers der tragbaren Computervorrichtung zugeordnet ist;
Steuern der mindestens einen Vorrichtung unter Verwendung einer ersten virtuellen Maschine, die auf der tragbaren Computervorrichtung läuft;
Ausführen einer zweiten virtuellen Maschine (10) auf der tragbaren Computervorrichtung, wobei die zweite virtuelle Maschine (10) ein Betriebssystem der tragbaren Computervorrichtung ausführt; und
Steuern der Netzwerkkonnektivität der tragbaren Computervorrichtung mit der zweiten virtuellen Maschine,
wobei die mindestens eine Vorrichtung ein fahrzeuginternes Infotainmentsystem (IVI) ist und
wobei die erste virtuelle Maschine ein Betriebssystem umfasst, das zu dem Fahrzeug gehört, in dem das IVI-System implementiert werden soll.

7. Verfahren nach Anspruch 6, ferner umfassend das Ausführen eines offenen Betriebssystems auf der zweiten virtuellen Maschine und das Ausführen einer dritten virtuellen Maschine und Steuern der Hardware der tragbaren Computervorrichtung einschließlich der Netzwerkkonnektivität mit der dritten virtuellen Maschine.

8. Verfahren nach Anspruch 6 oder 7, wobei die persönliche Umgebung ein Kraftfahrzeug beinhaltet.

## Revendications

1. Appareil comprenant :
un dispositif informatique portable (1) comprenant :
au moins une première machine virtuelle (5), dans lequel la première machine virtuelle peut fonctionner pour communiquer avec et commander au moins un dispositif (2) associé à au moins un environnement personnel d'un utilisateur du dispositif informatique portable ; et
au moins une deuxième machine virtuelle (10) pouvant fonctionner pour exécuter un système d'exploitation du dispositif informatique portable et commander la connectivité réseau du dispositif informatique portable,
dans lequel ledit au moins un dispositif est un système d'infodivertissement embarqué, IVI, et
dans lequel la première machine virtuelle comprend un système d'exploitation natif du véhicule dans lequel le système IVI doit être mis en œuvre.

2. Appareil selon la revendication 1, dans lequel la deuxième machine virtuelle peut fonctionner pour exécuter un système d'exploitation ouvert du dispositif informatique portable et le dispositif informatique portable peut en outre fonctionner pour exécuter une troisième machine virtuelle pouvant fonctionner pour commander le matériel propre du dispositif informatique portable comportant la connectivité réseau.

3. Appareil selon une quelconque revendication précédente, dans lequel l'environnement personnel comporte un véhicule automobile.

4. Appareil selon une quelconque revendication précédente, dans lequel le dispositif informatique portable est un téléphone mobile.

5. Appareil selon une quelconque revendication précédente, dans lequel l'au moins un dispositif fait partie de l'environnement personnel.

6. Procédé comprenant les étapes de :
l'établissement d'une communication entre un dispositif informatique portable et au moins un dispositif associé à au moins un environnement personnel d'un utilisateur du dispositif informatique portable ;
la commande de l'au moins un dispositif à l'aide d'une première machine virtuelle fonctionnant sur le dispositif informatique portable ;
l'exécution d'une deuxième machine virtuelle (10) sur le dispositif informatique portable, dans lequel la deuxième machine virtuelle (10) exécute un système d'exploitation du dispositif informatique portable ; et
la commande de connectivité réseau du dispositif informatique portable avec la deuxième machine virtuelle,
dans lequel ledit au moins un dispositif est un système d'infodivertissement embarqué, IVI, et
dans lequel la première machine virtuelle comprend un système d'exploitation natif du véhicule dans lequel le système IVI doit être mis en œuvre.

7. Procédé selon la revendication 6, comprenant en outre l'exécution d'un système d'exploitation ouvert sur la deuxième machine virtuelle, et l'exécution d'une troisième machine virtuelle et la commande du matériel du dispositif informatique portable comportant la connectivité réseau avec la troisième machine virtuelle.

8. Procédé selon la revendication 6 ou 7, dans lequel l'environnement personnel comporte un véhicule automobile.
